# EUROPEAN PATENT SPECIFICATION

(11) **EP 0 171 073 B1**
(45) Date of publication and mention of the grant of the patent: **03.02.1993**
(21) Application number: 85109913.5
(22) Date of filing: 07.08.1985
(51) Int. Cl.: G06F 9/44

(54) **Modular apparatus**
Vorrichtung mit modularer Bauweise
Appareil modulaire

(30) Priority: 07.08.1984 GB 8420063
(43) Date of publication of application: 12.02.1986
(73) Proprietor: KONTRON INSTRUMENTS HOLDING N.V., Curacao (AN)
(72) Inventor: Cartledge, Malcolm, Abbotsbrook, Bourne And., Bucks. (GB)
(74) Representative: Körber, Wolfhart, Dr.rer.nat.

(56) References cited:
- DE-A- 3 243 502
- US-A- 4 412 300
- IBM TECHNICAL DISCLOSURE BULLETIN, vol. 22, no. 10, March 1980, pages 4615-4616; S. MEGURO: "Automatic module document"
- A.M. LISTER: "Fundamentals of operating systems", edition 2, 1979, pages 52-57, MacMillan Press Ltd, London, GB

## Description

This invention relates to improvements in or relating to modular apparatus.

Traditionally, flexibility has been introduced into electronic or electrical instruments or apparatus by the use of modular design. A basic chassis or main frame is provided to house, typically, all power supply, display and data transmission components, and a modular back plane having slots into which modules can be plugged. Each module is designed to be self-contained in function and operation and to supply signals to the common display and data transmission components. Thus, for example, in apparatus involving the use of microprocessors, each module would have its own microprocessor and operating system. Such arrangements have however led to loading rules which rigidly determine into which slots of the back plane particular modules can be plugged impairing the potential flexibility of the apparatus.

US-A-4412300 discloses a computer capable of receiving an add-on memory module. This module forms an extension to the memory of the microprocessor controller. Like any other memories this add-on memory may contain data and/or instructions which can perform functions on the base machine hardware. The memory module has no capability for signal input or output and is unable to drive any hardware other than the base machine.

According to the present invention, there is provided a modular apparatus comprising: a central processing unit; a bus connected to the central processing unit and having means for connecting one or more modules to the bus, means for detecting connection or disconnection of a module to or from the bus; and means for transferring the operating instructions stored in a module to a memory of the central processing unit upon connection of the module to the bus to allow operation of the module to be controlled by the central processing unit. Preferably, means are provided for inputting data to and outputting data from the central processing unit, wherein each module having memory means storing instructions for controlling operation of the module, and means are provided for removing the operation instructions for a module from the memory of the central processing unit upon disconnection of that particular module.

In order that the invention may be readily understood, an embodiment thereof will now be described, by way of example, with reference to the accompanying drawings in which:

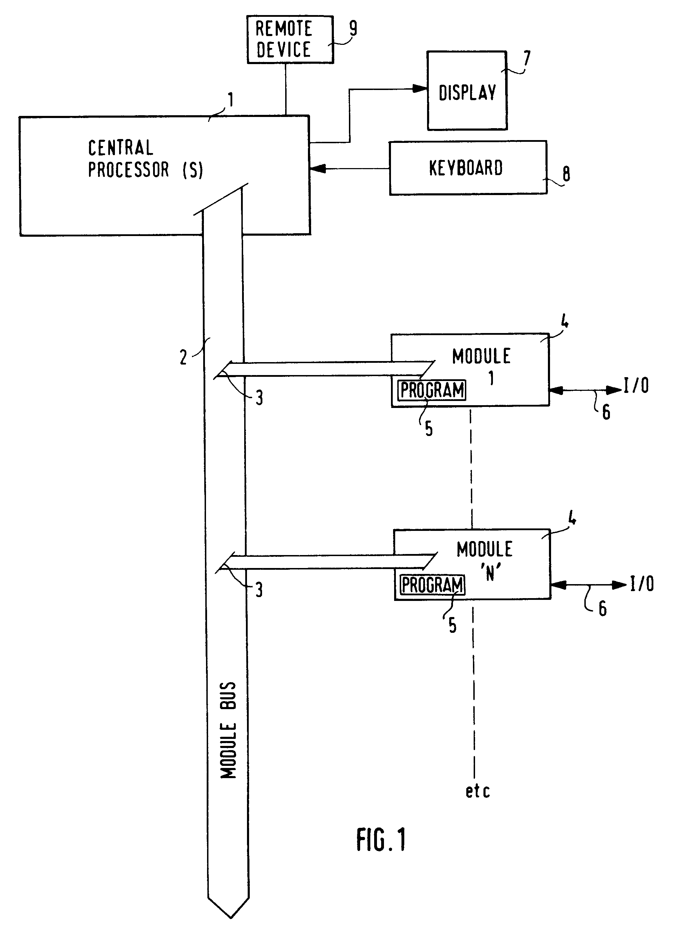

FIGURE 1 is a block diagram of modular apparatus embodying the invention;
FIGURE 2 is a flow chart illustrating the operation of a CPU of the apparatus; and
FIGURES 3A, 3B and 3C are flow charts illustrating, in detail, parts of the operation of the CPU illustrated in Figure 2.

Referring now to the drawings, the apparatus comprises a central processing unit (CPU) 1 to which is connected a bus 2. The bus 2 may be a proprietory bus or a standard bus, for example an IEEE 488, IEEE 696 or an STD bus. The bus 2 is provided at various points along its length with module slots 3 into which modules 4 may be plugged. Each module 4 incorporates a memory 5, for example a read only memory (ROM), in which is stored instructions, in the form of a program, for operating the module. The module may also contain a microprocessor and controls etc. Each module 4 may be connected via a respective line 6 to an input/output device (not shown) through which data may be input to or output from the module.

The central processing unit 1 which is controllable by signals input thereto from a keyboard 8 comprises a single microcomputer system which may consist of several microprocessors incorporating a multi-tasking operating system. A low priority of the multi-tasking operating system is to continually interrogate the module slots 3 in order to detect whether a module has been inserted or removed.

If the insertion of a module 4 is detected, the operating system of the CPU 1 causes the program stored in the inserted module to be downloaded into a memory of the CPU 1, thus linking the operating instructions for the inserted module with the operating system of the CPU 1 to allow the CPU to control operation of the module 4.

The operating system of the CPU 1 will accordingly be able to gather and process data from the just-connected module as well as all of the modules 4 already connected to the bus. The data thus gathered may be displayed on a display 7 such as a visual display unit or transmitted to a remote device or devices 9. As will be understood from the above description, logical control of any modules 4 connected to the bus 2 can be effected from the shared keyboard 8. Further, inter-module software communication can be achieved using conventional message passing schemes.

Preferably, the memory of the central processing unit 1 in which the operating programs for the modules 4 connected to the bus 2 are stored after downloading to the CPU 1 comprises a random access memory (RAM). Thus, when the operating system of the CPU 1 detects that a module 4 has been removed not only are the software tasks associated with that module terminated but all other module operating programs stored in the memory are shifted so as to fill the gap left by the removal of the operating program of the removed module to maximise space for further module operating programs. Of course, if the modules or apparatus is such that it is necessary to switch the CPU 1 off when replacing a module, it will not be necessary for the stored programs to be shifted.

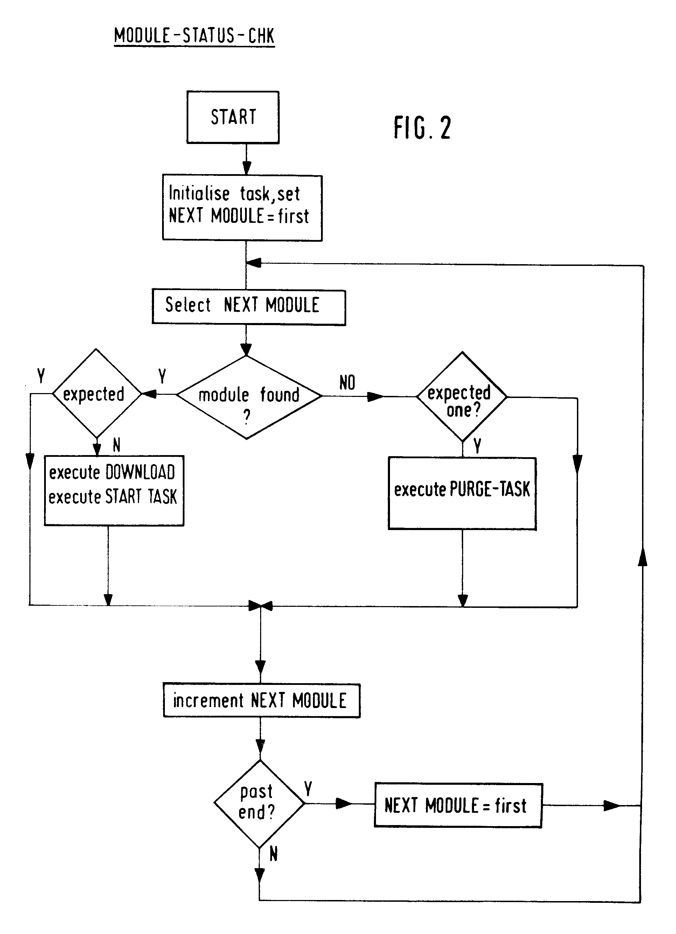

Figure 2 is a flow chart illustrating the operation of the procedure MODULE-STATUS of CPU 1. This procedure searches through the module slots, checking for any modules which have been inserted or removed, and taking appropriate action.

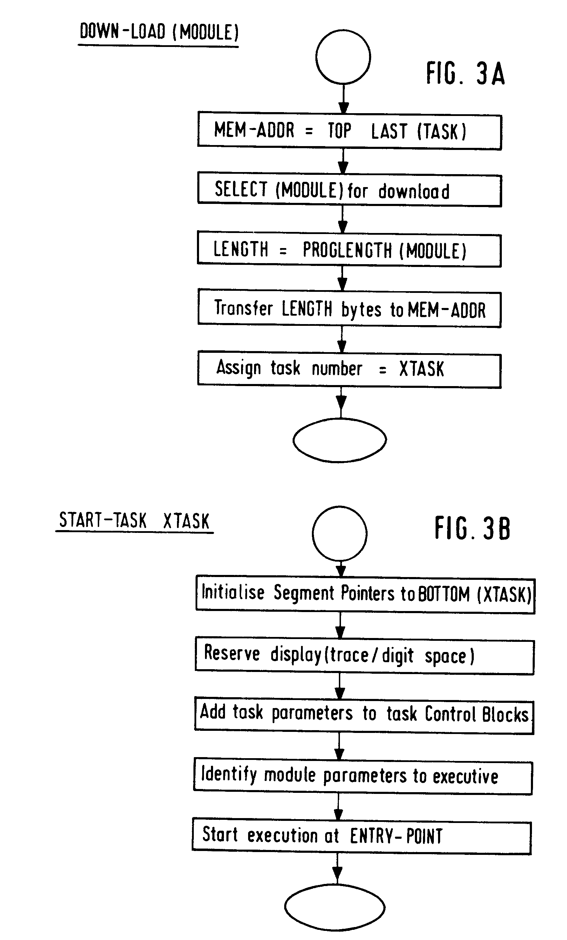

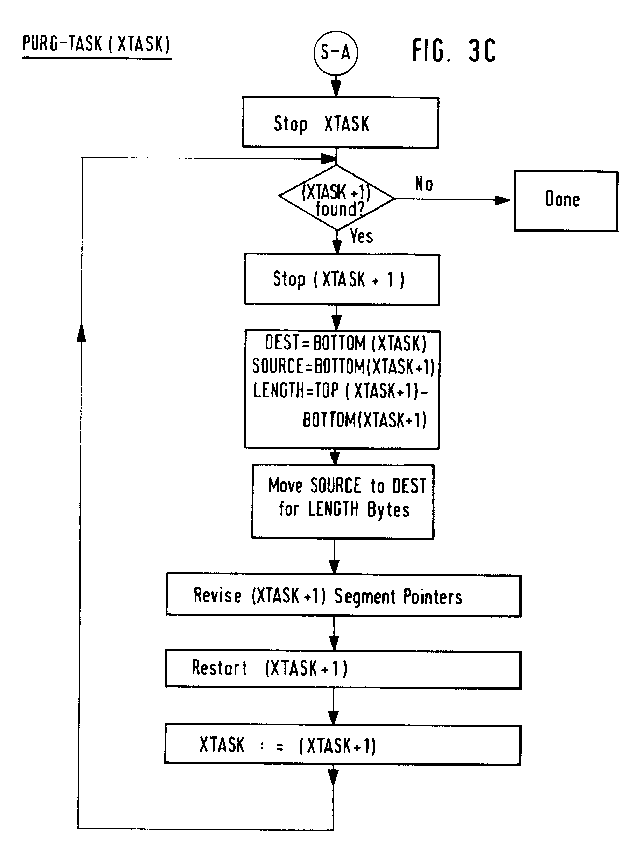

At the start the variable NEXT-MODULE is set to the first module slot. The software then checks to see if a module is connected to that slot. If a module is found, and one was expected; or if no module is found, but no module was expected, then no action is taken. If, however, a module is found, but no module was expected, then a module must have been inserted since procedure MODULE-STATUS was last executed. The procedures DOWNLOAD (figure 3A) and START-TASK (Figure 3B) are then executed which loads the module software into the memory of CPU 1 and start it executing. If a module is not found, but a module was expected, then a module must have been removed from the slot since the procedure was last executed. The procedure PURGE-TASK (Figure 3C) is executed to halt the module software and remove it from the memory of CPU 1. After completing the operation on the module software the variable NEXT-MODULE is incremented and checked against bounds, and if the last module slot has just been processed, it is reset to the first module. The software then loops back to check for the next module.

Figure 3A is a flow chart of the procedure DOWN-LOAD which is executed from procedure MODULE-STATUS when a module is found to have been inserted. The procedure takes as input the variable MODULE, being the slot number of the module to be downloaded, and procedures as a result the variable XTASK, being the last number assigned to the downloaded software.

The variable MEM-ADDR is set to the last address currently being used by the system and the variable LENGTH is set to the number of bytes to be transfered by reading the first bytes of the module software. The software is then downloaded by transferring LENGTH bytes to memory, starting at location MEM-ADDR. Finally the variable XTASK is set to the next available task number.

Figure 3B is a flow chart of the procedure START-TASK which is executed after DOWN-LOAD (Figure 3A) by procedure MODULE-STATUS. The procedure takes as input the variable XTASK, being the task number to start execution. First the segmentation pointers are set to the lowest location of XTASK; then the relevant trace and digit memory space is reserved and the task parameters are set in the task control blocks. Finally the module parameters are inserted into the monitor database and the tasks are executed from the location ENTRY-POINT which was identified when the module software was downloaded.

Figure 3C is a flow chart of the procedure PURGE-TASK which is executed from procedure MODULE-STATUS (Figure 3A) when a module is found to have been removed. A task is purged by stopping its execution and moving all other tasks at higher memory locations down, to make the memory which has been freed available for other modules. The procedure takes as input a task number as the variable XTASK. First the input procedure is stopped executing. Then each subsequent task is checked for, and if found moved down in memory to leave no unused gaps. This process repeats until all tasks have been moved down and the free memory is available for new modules to be loaded into
New modules, perhaps resulting from further developement, can be simply plugged into the existing module slots of the bus of modular equipment embodying the invention without the need for any modification, maximising the flexibility of the apparatus. Moreover, the design of the basic apparatus is considerably simplified because the software required for operating the modules is separate from the basic operating system of the CPU. Accordingly, the apparatus provides an improvement in ergonomics over conventional modular apparatus.

Apparatus in accordance with the invention finds particular application in the medical field, in particular in patient monitoring equipment.

## Claims

1. Modular apparatus comprising:
a central processing unit (1); a bus (2) connected to the central processing unit and having means (3) for connecting one or more modules (4) to the bus (2); means for detecting connection or disconnection of a module (4) to or from the bus (2); and means for transferring the operation instructions stored in a module (4) to a memory of the central processing unit (1) upon connection of the module (4) to the bus to allow operation of the module (4) to be controlled by the central processing unit (1)
**characterized in that**
each module (4) is provided with memory means (5) storing instructions for controlling operation of the module, and means are provided for removing the operation instructions for a module (4) from the memory of the central processing unit (1) upon disconnection of that particular module.

2. Modular apparatus according to Claim 1,
**characterized by**
means for inputting data to and outputting data from the central processing unit (1).

3. Modular apparatus according to Claim 1,
**characterized in that**
the central processing unit (1) memory comprises a random access memory.

4. Modular apparatus according to any of the Claims 1 to 3,
**characterized in that**
in use, when a module (4) is disconnected from the bus (2) and the operating instructions therefore are removed from the central processing unit (1), the remaining instructions stored in the memory are shifted to maximize the available space in the central processing unit (1) memory.

5. Modular apparatus according to any preceding Claim for use in the field of medicine.

6. Modular apparatus according to Claim 5, for use in patient monitoring equipment.

## Patentansprüche

1. Modular aufgebaute Vorrichtung mit einer Zentraleinheit (1), einem Bus (2), der mit der Zentraleinheit verbunden ist und Mittel (3) zum Verbinden eines oder mehrerer Module (4) mit dem Bus (2) aufweist, mit Mitteln zum Feststellen einer Verbindung oder einer Trennung eines Moduls (4) mit oder von dem Bus (2), und mit Mitteln zur Übertragung der in einem Modul (4) gespeicherten Betriebsanweisungen zu einem Speicher der Zentraleinheit (1) nach Verbinden des Moduls (4) mit dem Bus, um einen Betrieb des Moduls (4) zu ermöglichen, bei der dieses durch die Zentraleinheit (1) gesteuert wird, **dadurch gekennzeichnet**, daß jedes Modul (4) mit einem Speicher (5) zur Abspeicherung der Befehle zum Steuern des Betriebs des Moduls (4) versehen ist, und daß Mittel vorgesehen sind zum Entfernen der Betriebsanweisungen für ein Modul (4) aus dem Speicher der Zentraleinheit (1) nach Abtrennen dieses einzelnen Moduls.

2. Modular aufgebaute Vorrichtung nach Anspruch 1, gekennzeichnet durch Mittel zur Eingabe von Daten in die und Ausgabe von Daten aus der Zentraleinheit (1).

3. Modular aufgebaute Vorrichtung nach Anspruch 1, dadurch gekennzeichnet, daß der Speicher der Zentraleinheit (1) einen RAM-Speicher enthält.

4. Modular aufgebaute Vorrichtung nach einem der Ansprüche 1 bis 3, dadurch gekennzeichnet, daß während des Gebrauchs, wenn ein Modul (4) vom Bus (2) abgetrennt ist und die Betriebsanweisungen daher aus der Zentraleinheit (1) entfernt worden sind, die im Speicher abgespeicherten verbliebenen Befehle verschoben werden, um den verfügbaren Raum im Speicher der Zentraleinheit (1) zu maximieren.

5. Modular aufgebaute Vorrichtung nach einem der vorhergehenden Ansprüche zur Verwendung auf dem Gebiet der Medizin.

6. Modular aufgebaute Vorrichtung nach Anspruch 5 zur Verwendung bei Patientenüberwachungsgeräten.

## Revendications

1. Appareil modulaire comprenant :
une unité centrale de traitement (1) ;
un bus (2) connecté à l'unité centrale de traitement et comportant un moyen (3) pour connecter un ou plusieurs modules (4) au bus (2) ;
un moyen pour détecter une connexion ou une déconnexion d'un module (4) vis-à-vis du bus (2) ; et
un moyen pour transférer les instructions de fonctionnement stockées dans un module (4) à une mémoire de l'unité centrale de traitement (1) suite à la connexion du module (4) au bus afin de permettre le contrôle du fonctionnement du module (4) par l'unité centrale de traitement (1),
caractérisé en ce que
chaque module (4) est muni d'un moyen de mémoire (5) qui stocke des instructions pour contrôler le fonctionnement du module et un moyen est prévu pour ôter les instructions de fonctionnement prévues pour un module (4) de la mémoire de l'unité centrale de traitement (1) suite à la déconnexion de ce module particulier.

2. Appareil modulaire selon la revendication 1, caractérisé par un moyen pour entrer des données sur l'unité centrale de traitement (1) et pour en sortir des données.

3. Appareil modulaire selon la revendication 1, caractérisé en ce que la mémoire de l'unité centrale de traitement (1) comprend une mémoire vive.

4. Appareil modulaire selon l'une quelconque des revendications 1 à 3, caractérisé en ce qu'en fonctionnement, lorsqu'un module (4) est déconnecté du bus (2) et lorsque les instructions de fonctionnement de celui-ci sont ôtées de l'unité centrale de traitement (1), les instructions restantes stockées dans la mémoire sont décalées afin de maximiser l'espace disponible dans la mémoire de l'unité centrale de traitement (1).

5. Appareil modulaire selon l'une quelconque des revendications précédentes destiné à une utilisation dans le domaine de la médecine.

6. Appareil modulaire selon la revendication 5 destiné à une utilisation dans un équipement de surveillance de patient.
